# EUROPÄISCHE PATENTSCHRIFT

(11) **EP 0 431 540 B1**
(45) Veröffentlichungstag und Bekanntmachung des Hinweises auf die Patenterteilung: **01.07.1998**
(21) Anmeldenummer: 90123151.4
(22) Anmeldetag: 04.12.1990
(51) Int. Cl.: H04M 1/26, H04M 1/65

(54) **Teilnehmereinrichtung mit einer Steuereinrichtung zur Umschaltung der Wahlverfahren**
Subscriber equipment with a control device for switching the dialling method
Equipement d'abonné muni d'un dispositif de commande pour changer le procédé de numérotation

(30) Priorität: 06.12.1989 DE 3940298
(43) Veröffentlichungstag der Anmeldung: 12.06.1991
(73) Patentinhaber: GRUNDIG Aktiengesellschaft, 90762 Fürth (DE)
(72) Erfinder: Mittelstaedt, Rainer, GRUNDIG E.M.V., Max Grundig, W-8510 Fuerth (DE)

(56) Entgegenhaltungen:
- GB-A- 2 170 076
- GB-A- 2 173 071
- PATENT ABSTRACTS OF JAPAN vol. 13, no. 195 (E-754)10. Mai 1989 & JP-A-1 016 156 ( CANON INC. ) 19. Januar 1989
- PATENT ABSTRACTS OF JAPAN vol. 12, no. 351 (E-660)20. September 1988 & JP-A-63 107 341 ( MATSUSHITA ELECTRIC IND CO ) 12. Mai 1988
- PATENT ABSTRACTS OF JAPAN vol. 12, no. 261 (E-636)22. Juli 1988 & JP-A-63 045 946 ( CANON INC. ) 26. Februar 1988

## Beschreibung

Die Erfindung betrifft eine Teilnehmereinrichtung, insbesondere einen Anrufbeantworter, mit einer Steuereinrichtung gemäß dem Oberbegriff des Patentanspruchs 1.

Wie Marktuntersuchungen deutlich zeigten, besteht sowohl beim beruflichen Anwender wie auch beim Privatmann ein Bedarf nach Teilnehmereinrichtungen, welche einfach zu bedienen sind und die Kommunikation mit einem beliebigen Partner ermöglichen. Es ist bekannt, ankommende Anrufe bei einem personell nicht besetzten Teilnehmeranschluß durch einen automatisch arbeitenden Anrufbeantworter (private Zusatzeinrichtung) entgegennehmen zu lassen. Weiterhin sind auch private Zusatzeinrichtungen bekannt, bei denen automatische Anrufbeantworter oder Auskunftgeber mit einer automatischen Wählhilfe, Wahlwiederholer (Wählautomaten) usw. kombiniert sind, wie dies beispielsweise in der DE-A-36 08 238 bzw. der inhaltsgleichen DE-A-36 08 239 beschrieben ist. Mit dem daraus bekannten Telefoncomputer ist es möglich die Nachricht des anrufenden Teilnehmers aufzuzeichnen, danach den Wählautomaten zu aktivieren und den Besitzer des Telefoncomputers automatisch über den europäischen Funkrufdienst oder über das Fernmeldenetz (Fernsprechnetz) zu rufen. Hierzu leitet der Wählautomat einen Verbindungsaufbau anhand der vorher vom Besitzer des Telefoncomputers eingegebenen und im Telefoncomputer gespeicherten Rufnummern ein und beim Melden des angerufenen Teilnehmers wird diesem mitgeteilt (im Telefoncomputer gespeicherte Ansage), daß der Besitzer des Telefoncomputers an den Telefonapparat zu holen ist. Die vom Telefoncomputer aufgezeichnete Nachricht des Anrufers kann dann vom Besitzer des Anrufbeantworters über das Fernmeldenetz mit dem mitgeführten Codesender ferngesteuert abgefragt werden.

Moderne Teilnehmereinrichtungen vereinigen in sich also verschiedene Geräte. Gerätekombinationen (bzw. Funktionen der Teilnehmereinrichtung) bestehen beispielsweise aus Anrufbeantworter, Wählautomat, Alarm- und Überwachungsgerät, Terminmelder, Fernschaltgerät und Diktiergerät. Eine solche Teilnehmereinrichtung weist deshalb eine Vielzahl von Leistungsmerkmalen auf. Diese sind im einzelnen:
- für den Anrufbeantworter die getrennte Zählung von Anrufen und Nachrichten, die Registrierung von Datum und Uhrzeit der Anrufe und Nachrichten, die Fernlöschung abgehörter Nachrichten usw.,
- für den Wählautomaten die Speicherung von Rufnummern, die Kurzwahl, die Zielwahl, die Wahlwiederholung usw.,
- für das Alarm- und Überwachungsgerät die Alarmmeldung über den europäischen Funkrufdienst zu einem Funkrufempfänger oder über das Fernsprechnetz zu einer Teilnehmereinrichtung, die zeitgesteuerte Alarmüberwachung, das Reinhören über ein externes oder im Telefoncomputer eingebautes Mikrofon in den Raum (Babysitterfunktion),
- für das Schalt-/Fernschaltgerät das automatische Einschalten von an den Telefoncomputer angeschlossenen Geräten oder Anlagen, wie z.B. Heizung, Licht, Radio, Fernseher oder Alarmanlage, die Fernabfrage des Schaltzustands usw.,
- für den Terminmelder die Auslösung eines akustischen Signals zu den eingegebenen Terminzeiten und
- für das Diktiergerät die Möglichkeit der Fernbedienung über ein Hand-Diktiergerätemikrofon oder die Freisprechfunktion oder das Mitschneiden von am Fernsprechapparat geführten Gesprächen.

Um diese verschiedenen Funktionen durchführen zu können, sind vom Besitzer der Teilnehmereinrichtung bei der Erst-Inbetriebnahme eine Vielzahl von Einstellungen, Eingaben usw. vorzunehmen. In der DE-A-36 08 238 ist die Programmierung des Telefoncomputers im einzelnen näher beschrieben und erläutert. Hierzu ist eine Vielzahl von Eingaben vorzunehmen: z.B. Datum und Uhrzeit, Alarm- und Terminzeiten, Aufnahmezeit für ankommende Gespräche, Fernabfragecodes, Eurosignalrufnummern oder sonstige Rufnummern, Rufnummern und Amtskennziffern für Kurzwahl, Zielwahl.

Die verschiedenenen Geräte bzw. Gerätefunktionen werden von einer im Telefoncomputer angeordneten Steuereinrichtung (Mikroprozessor) gesteuert, wobei über eine Anzeige (häufig LCD-Display) eine Kontrolle der vom Benutzer eingegebenen Daten möglich ist. In der Praxis hat sich dabei herausgestellt, daß häufig eine Überprüfung des im Fernmeldenetz benutzten Wahlverfahrens und, falls erforderlich, die Umschaltung des Wahlverfahrens nicht vorgenommen wird. Wie dies beispielsweise in der DE-A-36 08 238 beschrieben ist, befindet sich an der Geräteunterseite ein Schalter, mit dem in Abhängigkeit vom jeweiligen Einsatzort des Geräts eine Umschaltung zwischen dem Impuls- oder Mehrfrequenzwahlverfahren vorgenommen werden kann. Befindet sich dieser Schalter nicht in der richtigen Schaltstellung oder wurde dieser versehentlich betätigt, so kann beispielsweise keine Rufweiterleitung über den europäischen Funkrufdienst (oder Cityrufdienst) zu einem Funkrufempfänger erfolgen. Dieser versteckte Fehler führt dazu, daß der gerufene, aber abwesende Teilnehmer nicht schnell auf einen Anrufreagieren kann.

Weiterhin ist aus der GB-A-2 173 071 eine Teilnehmereinrichtung (Telephone answering system) mit einem Mikroprozessor bekannt, welcher die Gerätefunktionen der Teilnehmereinrichtung und/oder den Austausch vermittlungstechnischer Informationen zwischen der Teilnehmereinrichtung und den Steuereinrichtungen der Vermittlungsstellen des Fernmeldenetzes steuert. Mit dem Mikroprozessor sind ein Speicher für Wählinformationen sowie ein Zwischenspeicher verbunden, in welchem eine vom anrufenden Teilnehmer eingegebene Fernsprechteilnehmer-Rufnummer zwischengespeichert wird. Der Mikroprozessor baut anhand der Wählinformation eine Verbindung zu einem Funkrufempfänger mit einer optischen Ausgabeeinrichtung auf und liest danach die zwischengespeicherte Fernsprechteilnehmer-Rufnummer aus. Die Teilnehmereinrichtung, die Funkrufzentrale, die Teilnehmereinrichtung des anrufenden Teilnehmers und die Teilnehmereinrichtung von der der gerufene Teilnehmer zurückruft, sind jeweils an eine Vermittlungsstelle desselben Femmeldenetzes angeschlossen. In diesem Fernmeldenetz wird ausschließlich ein Mehrfrequenz- Codewahlverfahren benutzt.

Schließlich ist aus Patent Abstracts of Japan JP-A-1016156 für eine Teilnehmereinrichtung das allgemeine Lösungsprinzip bekannt, daß eine Steuereinrichtung bei jedem Verbindungsaufbau das im Fernmeldenetz benutzte Wahlverfahren feststellt und - falls erforderlich - automatisch auf dieses Wahlverfahren umschaltet.

Im einzelnen ist dem Gegenstand der JP-A-1016156 zu entnehmen, daß die Steuereinrichtung beim Verbindungsaufbau die erste Ziffer der vom Benutzer eingegebenen Rufnummer beispielsweise nach dem Mehrfrequenz-Codewahlverfahren erzeugt, danach überprüft, ob als Reaktion darauf in der Vermittlungsstelle ein dem Wählton entsprechendes Tonsignal abgeschaltet wird und - falls dies nicht der Fall ist - die Umschaltung auf das Impulswahlverfahren vornimmt und die Erzeugung der eingegebenen Rufnummer nach dem Impulswahlverfahren steuert bzw. umgekehrt. In der Praxis hat sich herausgestellt, daß die beim Gegenstand der JP 1016156 vorgesehene Überprüfung des Wahlverfahrens bei jedem Verbindungsaufbau auf Schwierigkeiten stößt, insbesondere einen erheblichen Wahlverzug bedeutet.

Der Erfindung liegt die Aufgabe zugrunde, eine Teilnehmereinrichtung derartig auszugestalten, daß auch ein ungeübter Benutzer die Erst-Inbetriebnahme der Teilnehmereinrichtung vornehmen kann, wobei versteckte Fehler, welche zu Betriebsstörungen der Teilnehmereinrichtung führen können, zuverlässig vermieden werden.

Diese Aufgabe wird bei einer gattungsgemäßen Teilnehmereinrichtung durch die Merkmale des Patentanspruchs 1 gelöst.

Beim Gegenstand der vorliegenden Anmeldung ist der in Patent Abstracts of Japan JP-A-1016156 aufgezeigte Weg weiter gegangen worden, um auch einem ungeübten Benutzer die Erst-Inbetriebnahme der Teilnehmereinrichtung zu ermöglichen. Ist die Teilnehmereinrichtung beispielsweise ein Anrufbeantworter, so wird nach dem Anschluß des Anrufbeantworters an die Fernmeldeleitung (Hauptanschlußleitung) und Anschluß an das elektrische Leitungsnetz (Netzstecker) ohne Mitwirkung des Benutzers automatisch das im Fernmeldenetz benutzte Wahlverfahren festgestellt, die Information über das festgestellte Wahlverfahren gespeichert und entsprechend dem festgestellten Wahlverfahren die Erzeugung der vom Benutzer zum Verbindungsaufbau eingegebenen Rufnummern nach diesem Wahlverfahren gesteuert.

Eine solche Überprüfung des Wahlverfahrens ermöglicht erstmalig auch einem Laien die Erst-Inbetriebnahme des Anrufbeantworters, da er hierzu lediglich die entsprechenden Steckverbindungen herstellen muß. Das anhand der gespeicherten Information festgelegte Wahlverfahren wird dann solange benutzt, bis kein Verbindungsaufbau mehr einleitbar ist oder die Teilnehmereinrichtung nach Trennung vom Fernmeldenetz wieder an ein Fernmeldenetz angeschlossen ist.

Durch die neue Zusatzfunktion der Teilnehmereinrichtung erübrigt sich für den Benutzer die Überprüfung des und ggf. die erforderliche Umschaltung auf das im Fernmeldenetz benutzte Wahlverfahren. Der zusätzliche Schaltungsaufwand ist beispielsweise bei modernen Komfortfernsprechapparaten zu vernachlässigen, da diese ohnehin eine MFV-fähige Tastatur aufweisen.

Bei der Ausführungsform der Teilnehmereinrichtung gemäß Patentanspruch 2, wird bei jedem Verbindungsaufbau von der Steuereinrichtung, anhand der gespeicherten Information über das festgestellte Wahlverfahren, automatisch eine Überprüfung des im Fernmeldenetz benutzten Wahlverfahrens vorgenommen. Hierbei könnte beispielsweise die empfangene vermittlungstechnische Information ausgewertet und diese Information über das festgestellte Wahlverfahren mit der bisher gespeicherten Information verglichen werden. Das anhand der gegebenenfalls neu gespeicherten Information festgelegte Wahlverfahren wird solange benutzt, bis kein Verbindungsaufbau mehr einleitbar ist oder die Teilnehmereinrichtung nach Trennung vom Fernmeldenetz wieder an ein Fernmeldenetz angeschlossen wird.

Die Ausführungsform der Teilnehmereinrichtung gemäß Patentanspruch 3 weist den Vorteil auf, daß die Steuereinrichtung hierbei die Funktion eines Wählautomaten übernehmen kann. Der Schaltungsaufwand für die Auswertung, ob der Wählton abgeschaltet wird oder nicht, ist gering, da moderne Teilnehmereinrichtungen ohnehin einen Hörtondetektor aufweisen. Falls ein solcher Detektor beispielsweise in Teilnehmereinrichtungen für Sondernetze nicht enthalten ist, kann auch das Melden der gerufenen Teilnehmereinrichtung als Kriterium für erfolgreiche Wahl benutzt werden.

Die Ausführungsform der Teilnehmereinrichtung gemäß Patentanspruch 4 weist den Vorteil auf, daß mit einer automatischen Umschaltung zwischen nur zwei verschiedenen Wahlverfahren die erfindungsgemäße Teilnehmereinrichtung in allen öffentlichen Nachrichtennetzen für vermittelte Verbindungen eingesetzt werden kann und keine Zusatzeinrichtungen erforderlich sind. Beispielsweise innerhalb von Nebenstellenanlagen kann beim Einsatz der erfindungsgemäßen Teilnehmereinrichtung ein zentral angeordneter Wahlumsetzer entfallen.

Die Ausführungsform der Teilnehmereinrichtung gemäß Patentanspruch 5 weist den Vorteil auf, daß beispielsweise im Zuge des Übergangs von analogen Fernmeldenetzen auf ein integriertes Digitalnetz (IDN) oder dienstintegrierendes Digitalnetz (ISDN), die sonst erforderliche manuelle Umschaltung oder die erforderliche Programmierung für den Übergang von derzeit Impuls- auf ein Mehrfrequenzwahlverfahren automatisch erfolgen würde. Somit wird, durch die Mitbenutzung des ohnehin in modernen Teilnehmereinrichtungen vorhandenen Empfängers, die Zuverlässigkeit der automatischen Umschaltung des Wahlverfahrens noch weiter verbessert.

Die Ausführungsform der Teilnehmereinrichtung gemäß Patentanspruch 6 weist den Vorteil auf, daß keine Zusatzeinrichtung zur Signalumsetzung der vom anrufenden Teilnehmer eingegebenen numerischen Nachrichten erforderlich ist.

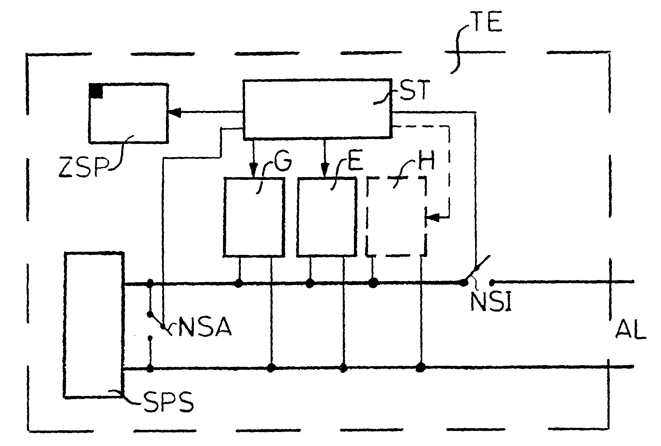

Die Erfindung wird im folgenden anhand einer in der Zeichnung dargestellen Ausführungsform näher beschrieben und erläutert.

Bei der in der Figur dargestellten Ausführungsform wird von der Anwendung bei privaten Zusatzeinrichtungen, insbesondere bei einem Anrufbeantworter, ausgegangen. Die erfindungsgemäße Teilnehmereinrichtung kann jedoch in allen Nachrichtennetzen für vermittelte Verbindungen eingesetzt werden.

Die in der Figur dargestellte Teilnehmereinrichtung TE steht über die Hauptanschlußleitung AL mit dem Fernmeldenetz in Verbindung. In der Teilnehmereinrichtung TE ist eine Steuereinrichtung ST angeordnet, welche die verschiedenen Funktionen der Teilnehmereinrichtung TE und den Austausch vermittlungstechnischer Informationen (z.B. Wählinformationen) zwischen der Teilnehmereinrichtung TE und den Vermittlungsstellen des Fernmeldenetzes steuert. Die Erzeugung der Wählinformation erfolgt in der Teilnehmereinrichtung TE entweder mit einem Nummernschalter-Impulskontakt NSI oder mit einem nach dem Mehrfrequenz-Codewahl-Verfahren arbeitenden Generator G. Die Steuereinrichtung ST ist weiterhin mit einem NSA-Kontakt NSA verbunden, welcher zur Abschaltung von Sprechschaltung SPS während der Wahl dient.

Weiterhin ist in der Teilnehmereinrichtung TE ein Hörtondetektor H und/oder ein Empfänger E für Signale beispielsweise nach dem DTMF-Verfahren (Doppelton-Mehrfrequenz-Verfahren) angeordnet, welche mit der Steuereinrichtung ST verbunden sind. Moderne Anrufbeantworter enthalten in der Regel ohnehin den Empfänger E und den Generator G. Dabei dient der Empfänger E zur Decodierung der für die Fernabfrage des Anrufbeantworters erforderlichen Codeworte. Zusätzlich kann der Generator G auch zur Signalumsetzung bei der Zwischenspeicherung und Übermittlung der Nachrichten dienen.

Schließlich ist die Steuereinrichtung ST mit einem Zwischenspeicher ZSP verbunden, in welchem die vom anrufenden Teilnehmer eingegebenen numerischen Nachrichten sowie die vom Benutzer eingegebenen Wählinformationen (z.B. Rufnummern) zwischengespeichert werden. Die Steuereinrichtung ST übernimmt die Funktion eines Wählautomaten und kann auch eine Vermittlungsfunktion ausführen.

Die neue Zusatzfunktion der erfindungsgemäßen Teilnehmereinrichtung TE wird anhand der Übermittlung im Zwischenspeicher ZSP zwischengespeicherter Nachrichten zu einem Funkrufempfänger mit optischer und/oder akustischer Ausgabeeinrichtung näher beschrieben und erläutert.

Kommt über die Hauptanschlußleitung AL in der Teilnehmereinrichtung TE ein Rufsignal an, so wird dieses von einer Rufsignal-Erkennungsschaltung erkannt und ein Steuersignal für die Steuereinrichtung ST erzeugt. Gesteuert durch die Steuereinrichtung ST wird beispielsweise der im Zwischenspeicher ZSP enthaltene Ansagetext ausgelesen und zum anrufenden Teilnehmer über die Hauptanschlußleitung AL übermittelt. Der anrufende Teilnehmer kann entweder eine gesprochene Nachricht hinterlassen oder er gibt mit seiner Teilnehmereinrichtung numerische Nachrichten für einen Funkrufempfänger ein. Diese numerische Nachricht kann z.B. die Rufnummer (Fernsprechteilnehmerrufnummer) des Fernsprechteilnehmers sein. Im Zwischenspeicher ZSP wird die Rufnummer zwischengespeichert und der anrufende Teilnehmer erhält die Schlußansage. Nach dem Auslösen der Verbindung leitet die Steuereinrichtung ST anhand der im Speicher ZSP gespeicherten Wählinformation einen Verbindungsaufbau zum Funkrufempfänger ein. Ist die Verbindung hergestellt, so wird die im Zwischenspeicher ZSP befindliche Information, d.h. die Fernsprechteilnehmerrufnummer, ausgelesen, übertragen und beispielsweise an einer Anzeige des Funkrufempfängers dargestellt.

Bei der erfindungsgemäßen Teilnehmereinrichtung TE kann die Steuereinrichtung ST auch derart ausgestaltet sein, daß diese nicht nur bei der Erst-Inbetriebnahme der Teilnehmereinrichtung TE das im Fernmeldenetz benutzte Wahlverfahren feststellt, sondern auch bei jedem Verbindungsaufbau eine Überprüfung des im Fernmeldenetz benutzten Wahlverfahrens und, falls erforderlich, die Umschaltung des Wahlverfahrens vornimmt.

## Patentansprüche

1. Teilnehmereinrichtung (TE), insbesondere Anrufbeantworter, mit einer Steuereinrichtung (ST), welche die verschiedenen Funktionen der Teilnehmereinrichtung (TE) und/oder den Austausch vermittlungstechnischer Informationen zwischen der Teilnehmereinrichtung (TE) und den Vermittlungsstellen des Fernmeldenetzes steuert und falls erforderlich, automatisch auf dieses Wahlverfahren umschaltet,
**dadurch gekennzeichnet**,
daß bei der Erst-Inbetriebnahme der Teilnehmereinrichtung (TE) oder für den Fall, daß kein Verbindungsaufbau mehr einleitbar ist, die Steuereinrichtung (ST) automatisch eine Wahl einleitet, bei der mindestens eine Ziffer oder die erste Ziffer einer Rufnummer nach einem der Wahlverfahren erzeugt (Probewahl), die Reaktion der Vermittlungsstelle darauf überprüft und gegebenenfalls dieser Vorgang mit einem anderen Wahlverfahren wiederholt wird und daß die Steuereinrichtung (ST) die Speicherung der Information über das festgestellte Wahlverfahren steuert.

2. Teilnehmereinrichtung nach Anspruch 1,
**dadurch gekennzeichnet**, daß die Steuereinrichtung (ST) bei jedem Verbindungsaufbau anhand der gespeicherten Information über das festgestellte Wahlverfahren eine Überprüfung des im Fernmeldenetz benutzten Wahlverfahrens und, falls erforderlich, die Umschaltung des Wahlverfahrens vornimmt.

3. Teilnehmereinrichtung nach Anspruch 1 oder 2,
**dadurch gekennzeichnet**, daß die Steuereinrichtung (ST) die Erzeugung der vom Benutzer zum Verbindungsaufbau eingegebenen Rufnummern anhand der gespeicherten Information über das festgestellte Wahlverfahren steuert, daß die Steuereinrichtung (ST) danach überprüft, ob als Reaktion darauf in der Vermittlungsstelle der Wählton abgeschaltet und/oder, ob der Verbindungsweg im Fernmeldenetz durchgeschaltet wird und daß die Steuereinrichtung (ST), falls dies nicht der Fall ist, die Umschaltung auf ein anderes Wahlverfahren vornimmt.

4. Teilnehmereinrichtung nach einem oder mehreren der Ansprüche 1 bis 3,
**dadurch gekennzeichnet**, daß in der Teilnehmereinrichtung (TE) zur Erzeugung der Rufnummer nach dem Impulswahlverfahren ein Nummernschalter-Impulskontakt (NSI) und zur Erzeugung der Rufnummer nach einem Mehrfrequenz-Codewahlverfahren ein Generator (G) angeordnet sind und daß Nummernschalter-Impulskontakt (NSI) und Generator (G) mit der Steuereinrichtung (ST) verbunden sind.

5. Teilnehmereinrichtung nach einem oder mehreren der Ansprüche 1 bis 4,
**dadurch gekennzeichnet**, daß in der Teilnehmereinrichtung (TE) ein Empfänger (E) für Signale nach einem Mehrfrequenz-Verfahren angeordnet ist, welcher mit der Steuereinrichtung (ST) verbunden ist und daß die Steuereinrichtung (ST) zur Übermittlung dieser Signale eine Umschaltung des Wahlverfahrens vornimmt, wenn vom Empfänger (E) Signale nach dem Mehrfrequenz-Verfahren erkannt wurde.

6. Teilnehmereinrichtung nach einem oder mehreren der Ansprüche 1 bis 5,
**dadurch gekennzeichnet**, daß vom anrufenden Teilnehmer eingegebene numerische Nachrichten in einem Zwischenspeicher (ZSP) zwischengespeichert werden, daß der Zwischenspeicher (ZSP) mit der Steuereinrichtung (ST) verbunden ist und daß der Nummerschalter-Impulskontakt (NSI) oder der Generator (G) zur Signalumsetzung vor der Zwischenspeicherung oder beim Auslesen der zwischengespeicherten Nachrichten benutzt werden.

## Claims

1. Subscriber device (TE), in particular answering machine, having a control device (ST) which controls the various functions of the subscriber device (TE) and/or the exchange of switching information between the subscriber device (TE) and the switching centres of the telecommunications network and, if necessary, automatically switches over to said dialling method, characterized in that during the initial commissioning of the subscriber device (TE) or if a call setup can no longer be initiated, the control device (ST) automatically initiates a dialling in which at least one digit or the first digit of a call number is generated by one of the dialling methods (trial dialling) and checks the response of the switching centre thereto, and this operation is repeated, if necessary, using another dialling method and in that the control device (ST) controls the storage of information on the dialling method ascertained.

2. Subscriber device according to Claim 1, characterized in that the control device (ST) checks the dialling method used in the telecommunications network whenever a call is set up on the basis of the information stored on the dialling method ascertained and, if necessary, switches over the dialling method.

3. Subscriber device according to Claim 1 or 2, characterized in that the control device (ST) controls the generation of the call numbers entered by the user for the purpose of call setup on the basis of the stored information on the dialling method ascertained and in that the control device (ST) then checks whether the dialling tone is switched off in the switching centre as a response thereto and/or whether the call path in the telecommunications network is switched through and in that the control device (ST) switches over to another dialling method if this is not the case.

4. Subscriber device according to one or more of Claims 1 to 3, characterized in that a dial pulse contact (NSI) is fitted in the subscriber device (TE) for generating the call number by the pulse dialling method and a generator (G) is fitted for generating the call number by a multifrequency code dialling method and in that dial pulse contact (NSI) and generator (G) are connected to the control device (ST).

5. Subscriber device according to one or more of Claims 1 to 4, characterized in that a receiver (E) for signals according to a multifrequency method is fitted in the subscriber device (TE), which receiver is connected to the control device (ST), and in that the control device (ST) switches over the dialling method to transmit said signals if signals according to the multifrequency method have been detected by the receiver (E).

6. Subscriber device according to one or more of Claims 1 to 5, characterized in that numerical messages entered by the calling subscriber are temporarily stored in a temporary memory (ZSP), in that the temporary memory (ZSP) is connected to the control device (ST) and in that the dial pulse contact (NSI) or the generator (G) is used for the purpose of signal conversion prior to the temporary storage or when reading out the temporarily stored messages.

## Revendications

1. Dispositif d'abonné (TE), notamment un répondeur téléphonique, comportant un dispositif de commande (ST), qui commande les différentes fonctions du dispositif d'abonné (TE) et/ou l'échange d'informations techniques de commutation entre le dispositif d'abonné (TE) et les centraux d'un réseau de télécommunication et, dans le cas où cela est nécessaire, exécute automatiquement une commutation sur ce procédé de sélection,
caractérisé en ce que
dans le cas de la première mise en service du dispositif d'abonné (TE) ou dans le cas où l'établissement de liaison ne peut plus être déclenché, le dispositif de commande (ST) déclenche automatiquement une sélection, lors de laquelle au moins un chiffre ou les premiers chiffres d'un numéro d'appel sont produits selon l'un des procédés de sélection (sélection d'échantillons), la réaction du central à cette opération est contrôlée et éventuellement ce processus est répété avec un autre procédé de sélection, et que le dispositif de commande (ST) commande la mémorisation de l'information par l'intermédiaire du procédé de sélection déterminé.

2. Dispositif d'abonné selon la revendication 1, caractérisé en ce que, lors de chaque établissement d'une liaison, le dispositif de commande (ST) effectue, sur la base de l'information mémorisée concernant le procédé de sélection déterminé, un contrôle du procédé de sélection utilisé dans le réseau de télécommunication et, dans le cas où cela est nécessaire, la commutation du procédé de sélection.

3. Dispositif d'abonné selon la revendication 1 ou 2, caractérisé en ce que le dispositif de commande (ST) commande la production des numéros d'appel introduits par l'utilisateur pour l'établissement d'une liaison, sur la base de l'information mémorisée concernant le procédé de sélection déterminé, que le dispositif de commande (ST) vérifie ensuite si, en tant que réaction à cela, la tonalité de sélection est interrompue dans le central et/ou si la voie de liaison dans le réseau de télécommunication est interconnectée, et que, lorsque ce n'est pas le cas, le dispositif de commande (ST) exécute la communication sur un autre procédé de sélection.

4. Dispositif d'abonné selon une ou plusieurs des revendications 1 à 3, caractérisé en ce que dans le dispositif d'abonné (TE) est prévu un contact (NSI) à impulsions formant commutateur de numérotation pour la production du numéro d'appel selon le procédé de sélection d'impulsions, et un générateur (G) pour la production du numéro d'appel selon un procédé de sélection de code à fréquences multiples, et que le contact (NSI) à impulsions formant commutateur de numérotation et le générateur (G) sont reliés au dispositif de commande (ST).

5. Dispositif d'abonné selon une ou plusieurs des revendications 1 à 4, caractérisé en ce que dans le dispositif d'abonné (TE) est disposé un récepteur (E) pour des signaux transmis selon un procédé à fréquences multiples et qui est relié au dispositif de commande (ST) et que le dispositif de commande (ST) réalise, pour la transmission de ces signaux, ne commutation du procédé de sélection lorsque des signaux ont été identifiés par le récepteur (E) conformément au procédé à fréquences multiples.

6. Dispositif d'abonné selon une ou plusieurs des revendications 1 à 5, caractérisé en ce que des informations numériques introduites par l'abonné appelant sont mémorisées temporairement dans une mémoire intermédiaire (ZSP), que la mémoire intermédiaire (ZSP) est reliée au dispositif de commande (ST) et que le contact (NSI) à impulsions formant commutateur de numération ou le générateur (G) sont utilisés pour la conversion de signaux en amont de la mémorisation intermédiaire ou lors de la lecture des informations mémorisées temporairement.
